# EUROPÄISCHE PATENTSCHRIFT

(11) **EP 1 698 672 B1**
(45) Veröffentlichungstag und Bekanntmachung des Hinweises auf die Patenterteilung: **07.08.2019**
(21) Anmeldenummer: 06012608.3
(22) Anmeldetag: 19.06.2002
(51) Int. Cl.: C09D 5/14, A01N 25/28, C04B 20/10, C09D 5/16, C04B 111/00, C04B 111/20

(54) **BIOZIDMIKROKAPSELN**
BIOCIDE MICROCAPSULES
MICROCAPSULES DE BIOCIDE

(43) Veröffentlichungstag der Anmeldung: 06.09.2006
(62) Teilanmeldung aus: 02762295.0
(73) Patentinhaber: THOR GmbH, 67346 Speyer (DE)
(72) Erfinder: Baum, Rüdiger, 68753, Waghäusel (DE); Zimmermann, Dagmar, Antoni, 67346, Speyer (DE); Wunder, Thomas, 67345, Neustadt (DE); Schmidt, Hans-Jürgen, 67346, Speyer (DE)

(56) Entgegenhaltungen:
- WO-A-01/24631
- WO-A-99/56542
- WO-A-03/089561
- US-B1- 6 280 759
- DATABASE WPI Section Ch, Week 200241 Derwent Publications Ltd., London, GB; Class A82, AN 2002-377074 XP002392832 & JP 2002 053412 A (DAIWA KAGAKU KOGYO KK) 19. Februar 2002 (2002-02-19)
- C.A. FINCH: "Microencapsulation" ULLMAN'S ENCYCLOPEDIA OF INDUSTRIAL CHEMISTRY, [Online] 15. Juni 2000 (2000-06-15), XP002231333 Gefunden im Internet: URL:http://www.mrw.interscience.wiley.com/ ueic/articles/a16_575/abstract-fs.html> [gefunden am 2003-02-14]

## Beschreibung

Die Erfindung betrifft ein Biozod eingeschlossen in einem Trägermaterial aus Feststoffteilchen zur Verwendung in einer Beschichtungsmasse zum Schutz gegen Mikroorganismenbefall von Oberflächen, die der Einwirkung von Feuchtigkeit oder Wasser ausgesetzt sind, wobei die Beschichtungsmasse entweder selbst einen pH-Wert von mindestens 11,0 aufweist oder für das Beschichten eines Untergrundmaterials vorgesehen ist, dessen pH-Wert mindestens 11,0 beträgt. Insbesondere bezieht sich die Erfindung auf Putze und Anstrichfarben, die mit Bioziden gegen einen Angriff durch Mikroorganismen geschützt werden sollen.

Es ist seit langem bekannt, dass Putze und Farben zur Konservierung ihrer Filme mit fungizid und/oder algizid wirkenden Bioziden versetzt werden. Dadurch soll ein unerwünschter Befall der Filme durch Mikroorganismen, z.B. Pilze, wie Schimmelpilze und Hefen, sowie durch Bakterien, Algen und Cyanobakterien verhindert werden (siehe D. Antoni-Zimmermann, P. Hahn, "Wässrige Siliconharz-Beschichtungssysteme für Fassaden", expert verlag, Band 522, Seiten 379 bis 406). Ein solcher Mikroorganismenbefall tritt beispielsweise bei mit entsprechenden Putzen und Anstrichfarben versehenen Gebäudefassaden auf. Diese verfärben sich durch das Wachstum der Mikroorganismen und benötigen daher je nach Bewitterungssituation schon nach relativ kurzer Zeit eine neue Oberflächenbehandlung.

Das gilt einerseits für solche Mauerbeschichtungen, deren pH-Wert in einem Bereich liegt, der ein Wachstum der Mikroorganismen erlaubt. Normalerweise handelt es sich hierbei um sogenannte kunstharzgebundene Beschichtungssysteme.

Andererseits gilt dies aber auch für sogenannte silicatgebundene Putze oder Anstrichfarben. Zwar liegt deren pH-Wert durch den großen Anteil an alkalischen Verbindungen oft in einem so hohen Bereich, dass zunächst kein Befall durch die Mikroorganismen stattfindet. Silicatbeschichtungen auf Dispersionsbasis haben bei ihrem Auftrag auf ein Mauerwerk einen pH-Wert von 11 bis 11,5. Reine Silicatbeschichtungen oder zementäre Systeme weisen häufig einen noch höheren pH-Wert auf.

Diese hohen pH-Werte nehmen aber im Laufe der Zeit ab. Dies geschieht einerseits auf Grund einer Neutralisation von alkalischen Beschichtungsmassebestandteilen durch Kohlendioxid aus der Luft. Andererseits existieren aber offensichtlich noch weitere Ursachen für den Mikroorganismenbefall auch bei stark alkalischen Beschichtungen. In der letzten Zeit häufen sich mehr und mehr Fälle, in denen trotz alkalischer Beschichtung an Gebäudefassaden schon nach relativ kurzer Zeit ein Bewuchs durch beispielsweise Algen oder Pilzen auftritt. Eine mögliche Ursache hierfür könnte in der Verwendung von immer dickeren oder qualitativ besseren Wärmeisoliermaterialien sein, die an den Gebäudefassaden unter den Beschichtungen angebracht werden, was teilweise auch durch neue Wärmedämmvorschriften veranlasst ist. Die bessere Isolierung verringert den Wärmeaustausch zwischen der Gebäudeinnenseite und der Beschichtungsaußenoberflache. Dies begünstigt die Taubildung und verzögert das Trocknen der Außenbeschichtung {siehe J.P. Blaich, "Die Gebäudehülle", Fraunhofer IRB Verlag, Seiten 46 bis 58, insbesondere Seiten 48 bis 50, Abschnitt 3, "Tauwasserniederschlag").

Je besser die Wärmedämmung einer Gebäudefassade ist, desto schneller und länger wird dort der Taupunkt unterschritten. Die Folge ist dann eine Begünstigung des Auswaschens von alkalischen Bestandteilen aus der Fassadenoberfläche, deren pH-Wert dadurch schneller in einen niedrigeren Bereich absinkt, in dem der Putz oder die Anstrichfarbe wieder ein Mikroorganismuswachstum zulässt. Gleichzeitig nimmt durch die längeren Feuchtigkeitszyklen auch das Ausmaß des Befalls zu.

Aus der EP 110 8 824 A1 ist ein Baumaterial bekannt, das Mikrokapseln enthält, in denen Hinokitiol als Wirkstoff eingeschlossen ist. Dieser Wirkstoff soll während eines längeren Zeitraums aus den Mikrokapseln austreten und sich in dem Baumaterial verteilen, um damit beispielsweise Mikroben und, Bakterien zu beseitigen. Das Hinokitiol ist als Biozid nicht geeignet, speziell das Wachstum von Algen und Pilzen an Gebäudefassaden in ausreichendem Umfang zu unterdrücken.

In der EP 0758633 B1 sind poröse Granulate beschrieben, die mit chemischen Stoffen beladen sind, um diese zu lagern und langsam freizugeben. Ein solcher chemischer Stoff ist beispielsweise ein Biozid. Das Material der Granulate kann z.B. ein poröses keramisches Material sein.

In der DE 4324315 A1 wird von einer Feinputzmasse berichtet, die gegebenenfalls ein Biozid als Zusatz enthalten kann. Dieses ist aber in keiner Weise gegen Zersetzung geschützt.

JP200253412A offenbart Mikrokapseln, die aus einer Hülle aus einem MelaminFormaldehyd-Harz bestehen und als bioziden Wirkstoff das 2-n-OctyI-4-isothiazolin-3 on (OIT) enthalten. Gemäß der Lehre nach JP200053412A soll das in dem genannten Harz eingeschlossene OIT über einen langen Zeitraum hinweg freigesetzt werden.

Der Erfindung liegt die Aufgabe zugrunde, ein Biozod eingeschlossen in einem Trägermaterial aus Feststoffteilchen zur Verwendung in einer Beschichtungsmasse, insbesondere einen Putz oder eine Anstrichsfarbe, zum Schutz gegen Mikroorganismenbefall von Oberflächen, die der Einwirkung von Feuchtigkeit oder Wasser ausgesetzt sind, anzugeben. Hierbei soll der Mikroorganismenbefall auch dann verhindert oder verzögert werden, wenn an der zu schützenden Oberfläche ein zunächst hoher pH-Wert im Laufe der Zeit absinkt.

Diese Aufgabe löst die Erfindung durch eine Beschichtungsmasse der eingangs genannten Art, die dadurch gekennzeichnet ist, dass die Beschichtungsmasse ein Biozid enthält, das in einem Trägermaterial aus Feststoffteilchen gebunden ist und daraus verzögert freigegeben wird.

Gemäß einer ersten Ausführungsform weist die erfindungsgemäße BeSchichtungsmasse einen pH-Wert von mindestens 11 auf. Dies hat den Vorteil, dass die Beschichtungsmasse nach dem Aufbringen auf die zu schützende Oberfläche zunächst durch ihren pH-Wert im alkalischen Bereich das Wachstum von Mikroorganismen, insbesondere von Algen und Pilzen, unterbindet. Ein weiterer Vorteil liegt darin, dass dann, wenn im Laufe der Zeit durch die Einwirkung von Kohlendioxid aus der Luft sowie durch Tau- und Regenwasser die alkalischen Bestandteile der Beschichtungsmasse mehr und mehr neutralisiert und aus der Beschichtungsmasse ausgewaschen werden und der dadurch gesunkene pH-Wert der Masse wieder ein Mikroorganismenwachstum ermöglichen würde, das erfindungsgemäß eingesetzte Trägermaterial das darin enthaltene Biozid allmählich freigibt und so ein weiteres Wachstum der Mikroorganismen verhindert. Insgesamt behält damit die Beschichtungsmasse an der zu schützenden Oberfläche für einen längeren Zeitraum ein einwandfreies Aussehen. Ohne die Erfindung könnte eine silicatgebundene Beschichtungsmasse, die naturgemäß einen relativ hohen pH-Wert aufweist, nicht von Anfang an mit einem auf normale Weise eingemischten Biozid ausgerüstet werden, weil dieses in der stark alkalischen Umgebung zersetzt würde. Ferner würde eine solche Beschichtungsmasse ohne die Erfindung auch in relativ kurzer Zeit durch Auswaschen der alkalischen Bestandteile ihre biozide Wirkung verlieren und einen Algen- oder Pilzbewuchs wieder zulassen.

Gemäß einer zweiten Ausführungsform der Erfindung kann die Beschichtungsmasse auch einen pH-Wert von deutlich unterhalb 11,0 , beispielsweise einen pH-Wert von 8,5 , aufweisen. Sie ist dann für ein Aufbringen auf einen stark alkalischen Untergrund, z.B. auf Beton oder einen zementgebundenen Armierungsputz eines Vollwärmeputzsystems, vorgesehen. In diesem Fall dringen allmählich aus dem Untergrundmaterial alkalische Verbindungen in die biozidhaltige Beschichtung ein und würden darin durch die Erhöhung des pH-Werts normalerweise ein ungeschütztes Biozid zersetzen. Das wäre zum Beispiel dann der Fall, wenn die Beschichtung auf den stark alkalischen Untergrund aufgebracht würde, bevor dessen pH-Wert durch Kohlendioxid aus der Luft auf einen Wert gesunken ist, bei dem das Biozid stabil bleibt. Beispielsweise müßte bei Isothiazolinonen als bioziden Wirkstoffen der pH-Wert auf etwa 4 bis 9 absinken.

Würde man in einem solchen Fall eines stark alkalischen Untergrunds das Biozid in üblicher Weise, d.h. ohne das erfindungsgemäß eingesetztes Trägermaterial aus Feststoffteilchen, der Beschichtung zusetzen, wie es z.B. bei bekannten kunstharzgebundenen Putzen und Anstrichfarben geschieht, würde man keine oder eine nur unzureichende biozide Wirkung erzielen. Der Grund liegt darin, dass die aus dem Untergrund in die Beschichtung eindringenden stark alkalischen Bestandteile das Biozid zersetzen und/oder in eine lösliche Form bringen. Die dabei entstehenden Stoffe wirken nicht mehr biozid und/oder werden schnell ausgewaschen. Da nur wenige Biozide mit hoher Beständigkeit im stark alkalischen Bereich bekannt sind und deshalb in diesem Bereich das Wirkungsspektrum gegenüber Mikroorganismen stark eingeschränkt ist, bringt die Erfindung diesbezüglich eine wesentliche Verbesserung.

Die erfindungsgemäße Beschichtungsmasse ist vorzugsweise ein silicatgebundener oder mineralischer Putz mit einem pH-Wert von mindestens 11 oder ein kunstharzgebundener oder silicon-harzgebundener Putz mit einem pH-Wert von unter 11.

Ferner ist es bevorzugt, dass die Beschichtungsmasse eine silicatgebundene Anstrichfarbe mit einem pH-Wert von mindestens 11 oder eine kunstharzgebundene oder siliconharzgebundene Anstrichfarbe mit einem pH-Wert von unter 11 ist.

Entsprechend den in der Umgebung von Putzen und Anstrichfarben hauptsächlich auftretenden Mikroorganismen ist es erfindungsgemäß bevorzugt, dass das Biozid ein Fungizid, ein Algizid oder ein Gemisch aus beiden ist. Dabei können auch mehr als zwei Biozide gleichzeitig eingesetzt werden.

In Beschichtungsmasse benützte Fungizide sind Isothiazolinone, Carbamate, Pyrithione, Aldehyde, Ketone, Chinone, Amine, Amidine, Guanidine, Hydrazo- und Azoverbindungen, aromatische Carbonsäurenitrile, -ester, -amide und -imide, Benzimidazole, Chinoxaline, Imidazole, Triazole, Pyrimidine, Triazine, halogenierte und nitrierte Alkohole und Phenole, Perhalogenalkylmercaptanderivate, Phosphor- und Phosphonsäureester, Tetrahydro-1,3,5-thiadiazinthione, Thio-und Isothiocyanate, Thiophene, Antibiotika und pflanzliche Wirkstoffe. Spezielle Beispiele für erfindungsgemäß gut geeignete Fungizide sind 2-Pyridinthiol-1-oxid-Zink (Zinkpyrithion) und 3-Iod-2-propinyl-N-butylcarbamat (IPBC).

Im Rahmen der Erfindung bevorzugte Algizide sind 2-Methylthio-4-butylamino-6-cyclopropylamino-s-triazin, 3-(4-Isopropylphenyl)-N,N-dimethylharnstoff und N'-(3,4-Dichlorphenyl)-N,N-dimethylharnstoff.

Die Feststoffteilchen des Trägermaterials sind vorzugsweise Granulatteilchen mit Hohlräumen.

Es ist vorteilhaft, wenn diese Granulatteilchen als Mikrokap-seln ausgebildet sind. In diesen sind die Biozide in feindisperser, flüssiger oder fester Phase eingeschlossen. Als Wandmaterial der Mikrokapseln kommen sehr unterschiedliche Stoffe in Frage, nämlich natürliche, halbsynthetische und synthetische Materialien.

Im Rahmen der Erfindung bevorzugte natürliche Materialien für die Mikrokapselwand sind Gummi arabicum, Agar, Agarose, Maltodextrin, Matriumalginat, Calciumalginat, Dextran, Fette, Fettsäuren, Cetylalkohol, Milchfeststoffe, Molassen, Gelatine, Gluten, Albumin, Schellack, Stärken, Caseinate, Stearine, Saccharose sowie Wachse, wie Bienenwachs, Carnau-bawachs und Spermacetiwachs.

Bevorzugte halbsynthetische Materialien für die Mikrokapselwand sind Celluloseacetat, Celluloseacetatbutyrat, Cellulose-acetatphthalat, Cellulosenitrat, Ethylcellulose, Hydroxypropylcellulose, Hydroxypropylmethylcellulose, Hydroxy-propylmethylcellulosephthalat, Methylcellulose, Natrium-carboxymethylcellulose, hydrierter Talg, Myristylalcohol, Glycerin mono- oder -dipalmitat, hydriertes Ricinusöl, Glycerylmono- oder -tristearate und 12-Hydroxystearylalkohol.

Bevorzugte synthetische Materialien für die Mikrokapselwand sind Formaldehyd-Melamin-Harze, Acrylpolymere und -copoly-mere, wie Polyacrylamid, Polyalkylcyanoacrylat, und Poly-(ethylenvinylacetat), Aluminiummonostearat, Carboxyvinyl-polymere, Polyamide, Poly-(methylvinylether-maleinsäurean-hydrid), Poly-(adipyl-L-lysin), Polycarbonate, Polytere-phthalamid, Poly-(vinylacetatphthalat), Poly-(terephthaloyl-L-lysin), Polyarylsulfone, Poly-(methylmethacrylat), Poly-(ε-caprolacton), Polyvinylpyrrolidon, Polydiraethylsiloxan, Polyoxyethylene, Polyester, Polyglykolsäure, Poly-milchsäure und deren Copoly-mere, Polyglutaminsäure, Polyly-sin, Polystyrol, Poly-(styrol-acrylnitril), Polyimide und Po-lyvinylalkohol.

Besonders bevorzugte Wandmaterialien der Mikrokapseln sind Formaldehyd-MelaminHarze. Die Mikrokapselwand kann auch aus zwei oder mehr der vorgenanten Materialien bestehen.

Für die Herstellung der im Rahmen der Erfindung als Trägermaterial eingesetzten Mikrokapseln sind zahlreiche Verfahren bekannt (siehe beispielsweise CA. Finch, R. Bodmeier, Micro-encapsulation, Ullmann's Encyclopedia of Industrial Chemistry, 6. Auflage 2001, Elektronic Release). In Abhängigkeit von dem gewünschten Biozid und dem einzusetzenden Wandmaterial der Mikrokapseln kann jeweils das geeignete Verfahren ausgewählt werden.

Es ist auch günstig, wenn als Granulatteilchen mit Hohlräumen solche Teilchen eingesetzt werden, deren Hohlräume z.B. durch Schäumen des Materials entstandene Poren sind, wie bei einem geschäumten keramischen Material oder bei Blähton, oder wenn die Hohlräume strukturbedingte Hohlräume sind, wie sie bei Zeolithen vorliegen.

Geeignete Granulatteilchen in Form eines geschäumten keramischen Materials und verschiedene Verfahren zu ihrer Herstellung sind z.B. aus der EP 0758633 B1 bekannt. Weitere Trägermaterialien, wie Zeolithe, sind in der DE 4337844 A1 beschrieben.

Die vorgenannten Feststoffteilchen des Trägermaterials, z.B. als Mikrokapseln, geschäumtes keramisches Material, Zeolith und dergleichen, weisen vorzugsweise eine Größe im Bereich von 30 bis 40 µm auf.

Außer den vorgenannten Bioziden sowie den Materialien für die Wand der Mikrokapseln oder für das poröse Granulat kann die erfindungsgemäße Beschichtungsmasse alle Stoffe enthalten, die in Abhängigkeit des Verwendungszwecks der Masse allgemein bekannt und üblich sind. Dazu gehören einerseits die entsprechenden Bindemittel und Filmbildner, wie Polyacrylate, Polystyrolacrylate oder Siliconharze, und andererseits die bekannten Hilfsstoffe, wie Pigmente, Füllstoffe, Lösemittel, Verdicker, Entschäumer, Weichmacher, Dispergiermittel, Emul-gatoren und Mittel zur Einstellung des pH-Werts der Beschichtungsmasse .

Die Beispiele erläutern die Erfindung.

Die Herstellungsbeispiele 1 bis 3 erläutern die Herstellung von Mikrokapseln, in denen ein biozider Wirkstoff eingeschlossen ist.

Das Herstellungsbeispiel 4 erläutert die Herstellung eines silicatgebundenen Fassadenputzes, das Herstellungsbeispiel 5 jene eines kunstharzgebundenen Reibeputzes.

Die Beispiele 1 bis 4 und die Vergleichsbeispiele 1 bis 4 erläutern die bessere Stabilität der erfindungsgemäßen Putze gegen Auswaschen des darin enthaltenen Biozids.

Die Beispiele 5 und 6 sowie die Vergleichsbeispiele 5 bis 7 erläutern das Pilzwachstum auf verschiedenen Putzoberflächen und den durch die Erfindung erzielten Vorteil.

### Herstellungsbeispiel 1

Unter Einsatz der nachfolgend angegebenen Stoffe wurden Mikrokapseln hergestellt, in denen Zinkpyrithion (2-Pyridin-thiol-1-oxid-Zink) als biozider Wirkstoff eingeschlossen war.

| Eingesetzte Stoffe | Mengen, g |
|---|---|
| Wasser | 389,6 |
| Polyacrylat | 1,5 |
| (Coatex BR 3, Firma Dimed) | |
| Gummi arabicum | 0, 6 |
| Siliconentschäumer | 0,3 |
| (Aspumit AP, Thor GmbH) | |
| Zinkpyrithion-Pulver | 60,0 |
| Konzentrierte Salzsäure | 4,0 |
| Formaldehyd-Melamin- Harz | |
| (Quecodur DMQ, Thor GmbH) | 144,0 |
| | 600,0 |

Zur Herstellung der Mikrokapseln wurde das Wasser vorgelegt. Darin wurden Polyacrylat, Gummi arabicum, Siliconentschäumer und das Zinkpyrithion eingerührt. Das erhaltene Gemisch wurde mit Salzsäure auf einen pH-Wert von 3 eingestellt und dann auf eine Temperatur von 70 °C erwärmt. Anschließend wurde während 1 h das Formaldehyd-Melamin-Harz zugetropft. Nachfolgend wurde das Gemisch noch 2 h bei der gleichen Temperatur nachgerührt.

Das erhaltene Gemisch enthielt die gewünschten Mikrokapseln und wurde unverändert bei der Herstellung des mikrokapselhal-tigen Putzes eingesetzt.

### Referenz Herstellungsbeispiel 2

Unter Einsatz der nachfolgenden Stoffe wurden Mikrokapseln hergestellt, in denen DCOIT (4,5-Dichlor-2-octylisothiazolin-3-on) als biozider Wirkstoff eingeschlossen war.

| Eingesetzte Stoffe | Mengen, g |
|---|---|
| Wasser | 389,6 |
| Polyacrylat | 1,5 |
| (Coatex BR 3, Firma Dimed) | |
| Gummi arabicum | 0 , 6 |
| Siliconentschäumer | 0,3 |
| (Aspumit AP, Thor GmbH) | |
| DCOIT, 98-%ig | 60,0 |
| Konzentrierte Salzsäure | 4,0 |
| Formaldehyd-Melamin-Harz | |
| (Quecodur DMQ, Thor GmbH) | 144,0 |
| | 600,0 |

Zur Herstellung der Mikrokapseln wurde das Wasser vorgelegt. Darin wurden Polyacrylat, Gummi arabicum, Siliconentschäumer und das Zinkpyrithion eingerührt. Das erhaltene Gemisch wurde mit Salzsäure auf einen pH-Wert von 3 eingestellt und dann auf eine Temperatur von 70 °C erwärmt. Anschließend wurde während 1 h das Formaldehyd-Melamin-Harz zugetropft. Nachfolgend wurde das Gemisch noch 2 h bei der gleichen Temperatur nachgerührt.

Das erhaltene Gemisch enthielt die gewünschten Mikrokapseln und wurde unverändert bei der Herstellung des mikrokapsel-haltigen Putzes eingesetzt.

### Herstellungsbeispiel 3

Unter Einsatz der nachfolgenden Stoffe wurden Mikrokapseln hergestellt, in denen IPBC (3-Iod-2-propinyl-N-butylcarbamat) als biozider Wirkstoff eingeschlossen war.

| Eingesetzte Stoffe | Mengen, g |
|---|---|
| Wasser | 338,4 |
| Gummi arabicum | 0,6 |
| Siliconentschäumer | 3,0 |
| (Aspumit AP, Thor GmbH) | |
| IPBC, 50-%ige wässrige Dispersion | 132,0 |
| (Acticide IPW 50, Thor GmbH) | |
| Citronensäure, 12-%ig | 60,0 |
| Formaldehyd-Melamin-Harz | |
| (Quecodur DMQ, Thor GmbH) | 66,0 |
| | 600,0 |

Zur Herstellung der Mikrokapseln wurde das Wasser vorgelegt. Darin wurden Gummi arabicum, Siliconentschäumer und IPBC-Dis-persion eingerührt. Anschließend wurde das Gemisch mit der Citronensäure auf einen pH-Wert von 1 bis 2 eingestellt und auf eine Temperatur von 55 bis 60 °C erwärmt. Dann wurde während 1 h das Formaldehyd-Melamin-Harz zugetropft. Nachfolgend wurde 2 h bei 55 bis 60 °C nachgerührt.

Das erhaltene Gemisch enthielt die gewünschten Mikrokapseln und wurde unverändert bei der Herstellung des mikrokapsel-haltigen Putzes eingesetzt.

### Herstellungsbeispiel 4

Es wurde ein silicatgebundener weißer Fassadenputz mit einer Körnung von 1,5 bis 2 mm hergestellt. Zunächst wurde eine Vormischung vorbereitet, die dann zu einer Endmischung, d.h. dem Putz, weiterverarbeitet wurde.

### a) Vormischung

Die folgenden Stoffe werden während 15 min gemischt, um ein Aufschließen bzw. Lösen zu erreichen.

| | Gew.-% |
|---|---|
| Wasser. | 9,3 |
| Dispergiermittel (Sapetin D 20) | 0,1 |
| Silicatstabilisator (Betolin Quart 20) | 0,3 |
| Rheologisches Additiv (Rhodopol 50 MD) | 0,1 |
| Titandioxid (Bayertitan R-KB-5) | 3,0 |
| Entschäumer (TEGO-Foamex KS 10) | 0,2 |

Zu dem erhaltenen Gemisch werden die folgenden Stoffe unter Rühren zugegeben:

| | Gew.-% |
|---|---|
| Styrol-Acrylat-Copolymerdispersion, 50 gew.-%ig (Mowilith SDM 765 A) | 6,0 |
| Al-Mg-Silicat, D 50 300 /um (Plastorit 05) | 2,5 |
| Armierender Faserfüllstoff (Arbocel B 400) | 0,5 |
| Calciumcarbonat, D 50 5 *fxm* (Omyacarb 5-GU) | 4,0 |
| Calciumcarbonat, D 50 7 jum (Omyacarb 10-GU) | 5,0 |
| Calciumcarbonat, D 50 23 jum (Omyacarb 40-GU) | 10,0 |

Dem erhaltenen Gemisch wurden unter Rühren nacheinander die folgenden Stoffe zugefügt:

| | Gew.-% |
|---|---|
| Hydrophobierungsmittel | 0,5 |
| (TEGO Phobe 1040) | |
| Additiv gegen Oberflächenrißbildung | 0,5 |
| (Lubranil A 1520) | |
| Stabilisiertes Kaliutnsilicat | 10,0 |
| (Wasserglas, Betolin P 35, 29 gew.-%ig) | |

### b) Endmischung

Die oben unter a) angegebene Vormischung ließ man 3 Tage reifen. Dann wurden unter langsamem Rühren die folgenden Stoffe eingemischt:

| | Gew.-% |
|---|---|
| Calciumcarbonat, D 50 ISO *jj.ra* (Omyacarb 130-GU) | 11,0 |
| Calciumcarbonat-Körnung, D 50 12 0 0 *pm* (Austrotec 10/15) | 37,0 |

Die Gesamtmenge der oben angegebenen Stoffmengen für die Vormischung und die Endmischung ergibt 100,0 Gew.-%.

Die fertige Endmischung war der Fassadenputz. In diesen wurden dann jeweils die Biozide gemäß den nachfolgenden Beispielen eingemischt.

### Herstellungsbeispiel 5

Es wurde ein kunstharzgebundener weißer Reibeputz aus den nachfolgenden Stoffen in üblicher Weise hergestellt.

| | Gew.-% |
|---|---|
| Polyacrylsäureester | 13,2 |
| (Acronal 290 D, BASF AG) | |
| Natriumnpolyphosphat, | 0,8 |
| 25-%ige Lösung | |
| Konservierungsmittel | 0,3 |
| (Acticide MBS, Thor GmbH) | |
| Entschäumer | 0,3 |
| (Agitan 2 80) | |
| Verdicküngsmittel, Polyacrylat, 8%-ige ammoniakalische Lösung (Latekoll D, BASF AG) | 0,8 |
| Testbenzin | 1,0 |
| (180-210 °C) | |
| Butyldiglykol | 1,0 |
| Basophob WDS (BASF AG) | 0,6 |
| Titandioxid, Rutil | 2,8 |
| (Kronos 2044, Kronos Titan GmbH) | |
| Calciumcarbonat | 39,5 |
| (Omyacarb 40-GU) | |
| Calciumcarbonat | 25,5 |
| (Omyacarb 130-GU) | |
| Al-Mg-Silicat | 6,5 |
| (Plastorit 05) | |
| Quarz-Rundkies | 4,5 |
| Wasser | 3,2 |
| | 100,0 |

Der erhaltene Reibeputz hatte einen pH-Wert von 8,5 bis 9.

### Beispiel 1 und Vergleichsbeispiel 1

Der gemäß dem Herstellungsbeispiel 5 erhaltene kunstharzgebundene Putz mit einem pH-Wert von 8,5 wurde mit dem mikro-kapselhaltigen Gemisch gemäß dem Herstellungsbeispiel 1 versetzt. Die Biozidmenge in dem Putz betrug 578 ppm.

Aus dem derart biozid ausgerüsteten Putz wurden Prüfkörper in Form von Putz-Rundproben für die Wässerungsprüfungen, hergestellt. Dazu wurde der Putz in eine runde Kunststoff form mit einem Durchmesser von ca. 5 cm und einer Tiefe von 3 mm eingestrichen. Die Schichtdicke entsprach der Korngröße des Putzes. Anschließend ließ man die Putzprobe trocknen und vollständig aushärten. Dann wurde der Prüfkörper aus der Form entnommen und für die Wässerungsprüfung konditioniert.

Zum Vergleich wurden auch Putz-Rundproben hergestellt, die sich von den obigen Proben nur dadurch unterschieden, dass das Zinkpyrithion nicht in mikroverkapselter Form, sondern in normaler Pulverform in den Putz eingemischt worden war.

Bei jeder Probe wurde der Gehalt an Zinkpyrithion in dem Putz vor dem Wässern und nach einer Wässerung während verschiedener Zeiträume bestimmt.

Die Proben wurden in 1 1 DIBT-Lösung statisch gewässert, wobei alle 24 h die ' Lösung vollständig erneuert wurde mit Ausnahme des 7. Tags.

i Bei der DIBT-Lösung handelt es sich um eine vom Deutschen Institut für Bautechnik (DIBT) angegebene alkalische Lösung
zur Wässerung von Proben. Die Lösung hat einen pH-Wert von 12,5 und besteht aus folgenden Stoffen:

| | |
|---|---|
| Natriumhydroxid | 0,88 g |
| Kaliumhydroxid | 3,45 g |
| Calciumhydroxid | 0,48 g |
| Wasser | Rest bis 1 l |

Die Ergebnisse, sind nachfolgend angegeben.

| | Restbiozid im Putz(pH 8,5),ppm | | | |
|---|---|---|---|---|
| | Wässerung in DIBT-Lösung, | | | |
| | Tage | | | |
| | ohne | 2 | 5 | 10 |
| Beispiel 1 | 578 | 478 | 259 | 187 |
| Vergleichsbeispiel 1 | 560 | 21 | 4 | 0 |

### Beispiel 2 und Vergleichsbeispiel 2

Beispiel 1 und Vergleichsbeispiel 1 wurden wiederholt, jedoch mit der Änderung, dass nun der silicatgebundene Reibeputz gemäß dem Herstellungsbeispiel 5 mit einem pH-Wert von 11,5 eingesetzt wurde und die Wässerung in Wasser während 1, 2 und 7 Tagen erfolgte.

Die Ergebnisse sind nachfolgend angegeben.

| | Restbiozid im Putz(pH 11,5), ppm | | | |
|---|---|---|---|---|
| | Wässerung in Wasser, | | | |
| | Tage | | | |
| | ohne | 2 | 5 | 10 |
| Beispiel 2 | 531 | 423 | 325 | 21 |
| Vergleichsbeispiel 2 | 568 | 2 | 0 | 0 |

### Referenz Beispiel 3 und Vergleichsbeispiel 3

Beispiel 1 und Vergleichsbeispiel 1 wurden im wesentlichen wiederholt, jedoch mit einigen Änderungen. Diese bestanden darin, dass anstelle der gemäß dem Herstellungsbeispiel 1 erhaltenen Mikrokapseln mit Zinkpyrithion nun die gemäß dem Herstellungsbeispiel 2 erhaltenen Mikrokapseln mit DCOIT als biozidem Wirkstoff eingesetzt wurden und anstelle einer Wässerung die Proben 4 Wochen lang auf eine Temperatur von 54 °C erhitzt wurden. Es wurde der silikatgebundene Putz gemäß dem Herstelungsbeispiel 4 mit einem pH-Wert von 11,5 verwendet.

Die Ergebnisse sind nachfolgend angegeben.

| | Restbiozid im Putz(pH 11,5) und Biozidabbau | | |
|---|---|---|---|
| | nach Wärmebehandlungbei 54 °C | | |
| | Wärmebehandlung,ppm Abbau, % | | |
| | ohne | 4Wochen | |
| Beispiel 3 | 508 | 474 | 6,7 |
| Vergleichsbeispiel 3 | 521 | 382 | 26,7 |

### Beispiel 4 und Vergleichsbeispiel 4

Beispiel 3 und Vergleichsbeispiel 3 wurden wiederholt, jedoch mit der Änderung, dass anstelle der Mikrokapseln gemäß dem Herstellungsbeispiel 2 mit DCOIT nun die Mikrokapseln gemäß der Herstellungsbeispiel 3 mit IPBC eingesetzt wurden.

Die Ergebnisse sind nachfolgend angegeben.

| | Restbiozid im Putz(pH 11,5) und Biozidabbau | | |
|---|---|---|---|
| | nach Wärmebehandlungbei 54 °C | | |
| | Wärmebehandlung,ppmAbbau, % | | |
| | ohne | 4Wochen | |
| Beispiel | 280 | 256 | 8,6 |
| Vergleichsbeispiel 4 | 291 | 211 | 27,5 |

### Beispiele 5 und 6 sowie Vergleichsbeispiele 5, 6 und 7

Es wurde das Pilzwachstum auf der Probenoberfläche untersucht.

Der auf eine Trägerplatte aufgebrachte silikatgebundene Putz gemäß dem Herstellungsbeispiel 4 war entweder biozidfrei (Vergleichsbeispiel 5), oder mit 100 ppm Zinkpyrithion (Vergleichsbeispiel 6), 200 ppm Zinkpyrithion (Vergleichsbeispiel 7), 100 ppm mikroverkapseltem Zinkpyrithion (Beispiel 5) oder 2 00 ppm mikroverkapseltem Zinkpyrithion (Beispiel 6) versetzt.

Die Putzproben wurden auf vorher gewässerte Calciumsilicat-platten der Größe 4,5 cm x 9 cm als Schicht aufgebracht. Die Schichtdicke des Putzes lag in der Größenordnung seiner Körnung, d.h. bei 1,5 bis 2 mm.

Nach dem Aushärten wurden die Proben gemäß Beispiel 1 gewässert.

Die Prüfung des Pilzwachstums geschah wie folgt:
Die Putzproben wurden in ein übliches Agarnährmedium eingegossen. Anschließend wurden die Proben mit einer Pilzsporensuspension besprüht. Die Suspension enthielt gleiche Anteile folgender Testorganismen:
Alternaria alternata
Aspergillus niger
Cladosporium cladosporoides
Penicillium funiculosum
Ulocladium atrum

Die Gesamtkonzentration des Pilzinoculums betrug 10^6 Sporen/ml.

Die Proben wurden in üblicher Weise über einen längeren Zeitraum bei für Pilze optimalen Wachstumsbedingungen gelagert. Anschließend wurde das Pilzwachstum auf der Probenoberfläche ausgewertet.

Zur Bewertung des Pilzwachstums auf der Probenoberfläche wurde der nachfolgende Maßstab angewandt.

| Wachstumsrate | Pilzwachstum |
|---|---|
| 0 | Kein Wachstum sichtbar |
| x | Minimales Wachstum (bis 25% der Fläche bewachsen) |
| xx | Leichtes Wachstum (bis 50% der Fläche bewachsen) |
| xxx | Mittelstarkes Wachstum (bis 75% der Fläche bewachsen) |
| xxxx | Starkes Wachstum (bis 100% der Fläche bewachsen) |

Die Ergebnisse der Prüfung des Pilzwachstums bei den untersuchten Proben sind nachfolgend angegeben.

| | Pilzwachstum auf der Oberfläche des Putzes | | | |
|---|---|---|---|---|
| | (pH 11-12) ohne/mitZinkpyrithion | | | |
| | Wässerung | | | |
| | Zinkpyrithion, | | | |
| | Ppm | ohne | 2 Tage | 5 Tage |
| Vergleichsbeispiel 5 | 0 | xxx | xxxx | xxx |
| Vergleichsbeispiel 6 | 100 | x | x | xxx |
| Vergleichsbeispiel 7 | 200 | 0 | x | xx |
| Beispiel 5 | 100 (verkapselt) | 0 | 0 | 0 |
| Beispiel 6 | 200 (verkapselt) | 0 | 0 | 0 |

## Patentansprüche

1. Biozid, eingeschlossen in einem Trägermaterial aus Feststoffteilchen, **dadurch gekennzeichnet, dass** das Trägermaterial ein Formaldehyd-Melamin-Harz enthält und das Biozid Zinkpyrithion, 3-Iod-2-propinyl-N-butylcarbamat, Methyl-1H-benzimidazol-2-yl-carbamat, N²-t-Butyl-N⁴-ethyl-6-methylthio-1,3,5-triazin-2,4-diyldiamin, 2-Methylthio-4-butylamino-6-cyclopropylamino-s-triazin, 3-(4-Isopropylphenyl)-N,N-dimethylharnstoff oder N'-(3,4-Dichlorphenyl)-N,N-dimethylharnstoff oder ein Gemisch aus zwei oder mehr dieser Verbindungen ist, wobei das Biozid aus dem Trägermaterial verzögert freigegeben wird.

2. Biozid nach Anspruch 1, **dadurch gekennzeichnet, dass** die Feststoffteilchen des Trägermaterials Granulatteilchen mit Hohlräumen sind.

3. Biozid nach Anspruch 2, **dadurch gekennzeichnet, dass** die Granulatteilchen mit Hohlräumen Mikrokapseln sind.

4. Biozid nach einem der Ansprüche 1 bis 3, **dadurch gekennzeichnet, dass** das Wandmaterial der Mikrokapseln hauptsächlich aus einem Formaldehyd-Melamin-Harz besteht.

5. Biozid nach einem der Ansprüche 1 bis 4, **dadurch gekennzeichnet, dass** die Feststoffteilchen einen Durchmesser von 30 bis 40 µm aufweisen.

6. Verwendung des eingeschlossenen Biozids nach einem der Ansprüche 1 bis 5 in einer Beschichtungsmasse zum Schutz gegen Mikroorganismenbefall von Oberflächen, die der Einwirkung von Feuchtigkeit oder Wasser ausgesetzt sind.

7. Verwendung einer Beschichtungsmasse wie in Anspruch 6 beschrieben zur Beschichtung von Gebäudewänden.

## Claims

1. Biocide, bound in a carrier material composed of particulate solids, wherein the carrier material contains a formaldehyde-melamine resin and the biocide is zinc pyrithione, 3-iodo-2-propynyl-N-butylcarbamate, methyl-1H-benzimidazol-2-yl-carbamate or N²-t-butyl-N⁴-ethyl-S-methylthio-1,3,5-triazine-2,4-diyldiamine, 2-methylthio-4-butylamino-6-cyclopropylamino-s-triazine, 3-(4-isopropylphenyl)-N,N-dimethylurea or N'-(3,4-dichlorophenyl)-N,N-dimethylurea or a mixture of two or more of these compounds.

2. A biocide according to Claim 1, **characterized in that** the particulate solids of the carrier material are granular particles having cavities.

3. A biocide according to Claim 2, **characterized in that** the granular particles with cavities are microcapsules.

4. A biocide according to any one of Claims 1 to 3, wherein the wall material of the microcapsules is composed primarily of a formaldehyde-melamine resin.

5. A biocide according to any one of Claims 1 to 4, wherein the particulate solids have a diameter of from 30 to 40 µm

6. Use of the biocide bound in a carrier material according to any one of Claims 1 to 5 in a coating composition for protection against attack by microorganisms of surfaces which are exposed to the action of moisture or water.

7. Use of a coating composition as described in Claim 6 for the coating of walls of buildings.

## Revendications

1. Biocide, enfermé dans un matériau de support composé de particules solides, **caractérisé en ce que** le matériau de support contient une résine de formaldéhyde-mélamine et le biocide est la pyrithione de zinc, le 3-iodo-2-propinyl-*N*-butylcarmate, le méthyl-1*H-*benzimidazol-2-yl-carbamate, la *N²*-t-butyl-*N⁴*-éthyl-6-méthylthio-1,3,5-triazine-2,4-diyldiamine, la 2-méthylthio-4-butylamino-6-cyclopropylamino-s-triazine, la 3-(4-isopropylphényl)-*N,N*-diméthylurée ou la *N'-*(3,4-dichlorophényl) *-N, N*-diméthylurée ou un mélange de deux ou plus de ces composés, le biocide étant libéré du matériau de support de manière retardée.

2. Biocide selon la revendication 1, **caractérisé en ce que** les particules solides du matériau de support sont des particules granulaires pourvues de cavités.

3. Biocide selon la revendication 2, **caractérisé en ce que** les particules granulaires pourvues de cavités sont des microcapsules.

4. Biocide selon l'une quelconque des revendications 1 à 3, **caractérisé en ce que** le matériau de paroi des microcapsules est majoritairement constitué d'une résine de formaldéhyde-mélamine.

5. Biocide selon l'une quelconque des revendications 1 à 4, **caractérisé en ce que** les particules solides présentent un diamètre de 30 jusqu'à 40 µm.

6. Utilisation du biocide enfermé selon l'une quelconque des revendications 1 à 5 dans une masse de revêtement pour la protection contre l'infestation par des micro-organismes de surfaces qui sont soumises à l'action de l'humidité ou de l'eau.

7. Utilisation d'une masse de revêtement selon la revendication 6 pour le revêtement de murs de bâtiment.
